# DEMANDE DE BREVET EUROPEEN

(11) **EP 2 474 769 A2**
(43) Date de publication de la demande: **11.07.2012**
(21) Numéro de dépôt: 12150033.4
(22) Date de dépôt: 03.01.2012
(51) Int. Cl.: F16L 37/18

(54) **Dispositif et procédé de transfert de liquide cryogénique**

(30) Priorité: 05.01.2011 FR 1150062; 05.04.2011 FR 1152897
(71) Demandeur: Azote Services, 44840 Les Sorinieres (FR); L'Air Liquide Société Anonyme pour l'Etude et l'Exploitation des Procédés Georges Claude, 75007 Paris (FR)
(72) Inventeur: Gibert, Alain, 44840 Les Sornieres (FR)
(74) Mandataire: De Cuenca, Emmanuel Jaime

(57) **Abrégé**

Dispositif destiné à transférer du liquide cryogénique d'une source (1) de liquide vers un cuve (2) de réception, le dispositif comprenant un conduit (3) flexible ayant une première extrémité destinée à être reliée à la source (1) de liquide et une seconde extrémité comprenant un organe (4) de préhension manuelle muni d'une canne (5) tubulaire de transfert, la canne (5) étant destinée à être introduite dans la cuve (2) de réception lors du transfert de liquide de la source (1) vers la cuve (2) de réception, la canne (5) tubulaire comprenant une première extrémité raccordée fluidiquement au conduit (3) flexible et une seconde extrémité libre, caractérisé en ce que la première extrémité de la canne (5) est fixée de façon sélectivement démontable sur la seconde extrémité du conduit (3) flexible et/ou sur l'organe (4) de préhension.

## Description

La présente invention concerne un dispositif, une canne et une installation de transfert de liquide cryogénique ainsi qu'un procédé d'utilisation.

L'invention concerne plus particulièrement un dispositif destiné à transférer du liquide cryogénique d'une source de liquide vers un cuve de réception, le dispositif comprenant un conduit flexible ayant une première extrémité destinée à être reliée à la source de liquide et une seconde extrémité comprenant un organe de préhension manuelle muni d'une canne tubulaire de transfert, la canne étant destinée à être introduite dans la cuve de réception lors du transfert de liquide de la source vers la cuve de réception, la canne tubulaire comprenant une première extrémité raccordée fluidiquement au conduit flexible et une seconde extrémité libre.

L'invention concerne notamment le transfert d'azote liquide depuis un réservoir de ravitaillement (sur un véhicule) vers une ou plusieurs cuves.

Les cuves remplies périodiquement d'azote liquide peuvent contenir, par exemple, des produits biologiques conservés à des températures cryogéniques.

Une cuve, par exemple d'azote liquide, peut être contaminée par les échantillons qu'elle contient. Par exemple, la rupture ou la fuite d'une paillette, d'un « cryotube » ou d'une poche stockée dans la cuve peut se produire à l'intérieur de la cuve.

D'autres pollutions peuvent contaminer l'intérieur d'une cuve. Ainsi, l'intérieur des cuves peut être recevoir des accumulations de polluants provenant de l'atmosphère extérieur ou des polluants dus à une mauvaise gestion de l'azote contenu dans la cuve.

L'opération de remplissage de la cuve (parfois appelée « biberonnage ») est réalisée généralement au moyen d'une canne tubulaire de transfert. Cette canne est introduite dans la cuve et vient en contact avec les vapeurs d'azote et/ou le liquide contenu dans la cuve qu'elle remplit.

A ce jour, les cannes de transfert de gaz liquéfié sont en inox et sont soudées directement au flexible. Ces cannes passent donc de réservoirs en réservoirs ce qui augmente les risques de transfert de germes ou de pollutions diverses entre les différentes cuves.

Lorsqu'un opérateur vient remplir successivement plusieurs cuves, il risque ainsi de transférer des polluants d'une cuve à une autre.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que la première extrémité de la canne est fixée de façon sélectivement démontable sur la seconde extrémité du conduit flexible et/ou sur l'organe de préhension, la canne comprenant ou étant constituée de plastique.

Par ailleurs, des modes de réalisation de l'invention peuvent comporter l'une ou plusieurs des caractéristiques suivantes :
- la première extrémité de la came est fixée de façon sélectivement démontable sur un tube de la seconde extrémité du conduit flexible et/ou sur l'organe de préhension,
- la première extrémité de la canne tubulaire comprend au moins un creux et/ou au moins une saillie destiné à coopérer sélectivement avec un système d'attache conjugué situé sur la seconde extrémité du conduit flexible et/ou sur l'organe de préhension,
- la première extrémité de la canne tubulaire est fixée sélectivement sur la seconde extrémité du conduit flexible et/ou sur l'organe de préhension via un système d'attache rapide du type à raccord rapide à cames mobiles, avec ou sans verrouillage,
- la seconde extrémité du conduit flexible et/ou l'organe de préhension comprend un logement de forme générale tubulaire destiné à accueillir la première extrémité de la canne tubulaire,
- la seconde extrémité du conduit flexible et/ou l'organe de préhension comprend au moins une pièce d'attache mobile et actionnable manuellement entre une position escamotée par rapport au logement et une position en saillie dans le logement pour coopérer sélectivement en butée mécanique avec la première extrémité de la canne tubulaire disposée dans le logement,
- lorsque la canne est en position montée dans le logement tubulaire, l'étanchéité entre d'une part la canne et d'autre part le conduit flexible et l'extérieur est réalisée par contact direct entre la première extrémité l'extrémité de la canne tubulaire et une paroi dudit logement,
- la canne comprend ou est constitué de matériau plastique,
- la canne comprend ou est constituée de matériau plastique polymère tel qu'un thermoplastique ou un polyester, notamment l'un au moins parmi : le Polyoxyméthylène (POMP), Polybutylene terephtalate (PBT), le Polyéthylène haute densité,
- la première extrémité de la canne tubulaire est emmanchée sur le tube, ledit tube assurant le transit de fluide cryogénique et ayant un diamètre extérieur égale ou inférieur au diamètre intérieur de la canne,
- les matériaux constitutifs respectivement de la canne et du tube ont des propriétés de rétractation mécanique lorsqu'ils sont soumis à des températures cryogéniques pour provoquer une contraction relative de l'extrémité de la canne sur le tube lorsque du fluide cryogénique circule dans le dispositif,
- au moins la première extrémité de la canne comprend ou est constituée de matériau plastique et en ce que le tube est constitué d'un matériau métallique, par exemple de l'inox,
- la cane comprend un ou des renforts, tels que des nervures entre ses parties de dimensions différentes.

L'invention concerne également une installation de transfert de liquide cryogénique comprenant une source de liquide et un dispositif de transfert sélectif du liquide cryogénique entre la source de liquide et au moins une cuve de réception, le dispositif de transfert étant conforme à l'une quelconque des caractéristiques ci-dessus ou ci-après.

L'invention concerne également une canne tubulaire destinée à être raccordée à l'extrémité d'un conduit de transfert de liquide cryogénique, la canne comprenant une première extrémité comprenant au moins un creux et/ou au moins une saillie prévue pour sa fixation sur un système d'attache rapide conjugué d'un dispositif de transfert de liquide.

L'invention concerne également un procédé de transfert de liquide cryogénique à partir d'une installation et de cannes tel que défini ci-dessus, pour remplir une pluralité de cuves distinctes, le procédé utilisant une première canne tubulaire pour réaliser le transfert de liquide dans une première cuve, le procédé comprenant ensuite des étapes de retrait de la canne utilisée et de remplacement de la canne utilisée par une nouvelle canne vierge à chaque transfert de fluide dans une nouvelle cuve.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe partielle d'un exemple de réalisation possible d'une canne de transfert selon l'invention,
- la figure 2 représente une vue en perspective, schématique et partielle, illustrant un exemple de montage d'une canne de transfert sur un dispositif de transfert de liquide cryogénique selon l'invention,
- la figure 3 représente une vue en coupe, schématique et partielle d'un détail de la figure 2, illustrant l'accrochage amovible de la canne sur un conduit de transfert de liquide,
- la figure 4 illustre un exemple d'installation de transfert de liquide cryogénique comprenant un dispositif de transfert selon l'invention,
- la figure 5 représente une vue en perspective, schématique et partielle, illustrant une variante de réalisation d'un dispositif de transfert de liquide cryogénique recevant une canne amovible selon l'invention,
- la figure 6 représente une vue en coupe longitudinale, schématique et partielle, illustrant le dispositif de transfert de liquide cryogénique de la figure 5 sur lequel est montée une canne de transfert,
- la figure 7 représente une vue en perspective, schématique et partielle, d'un autre exemple de réalisation d'une canne de transfert selon l'invention.

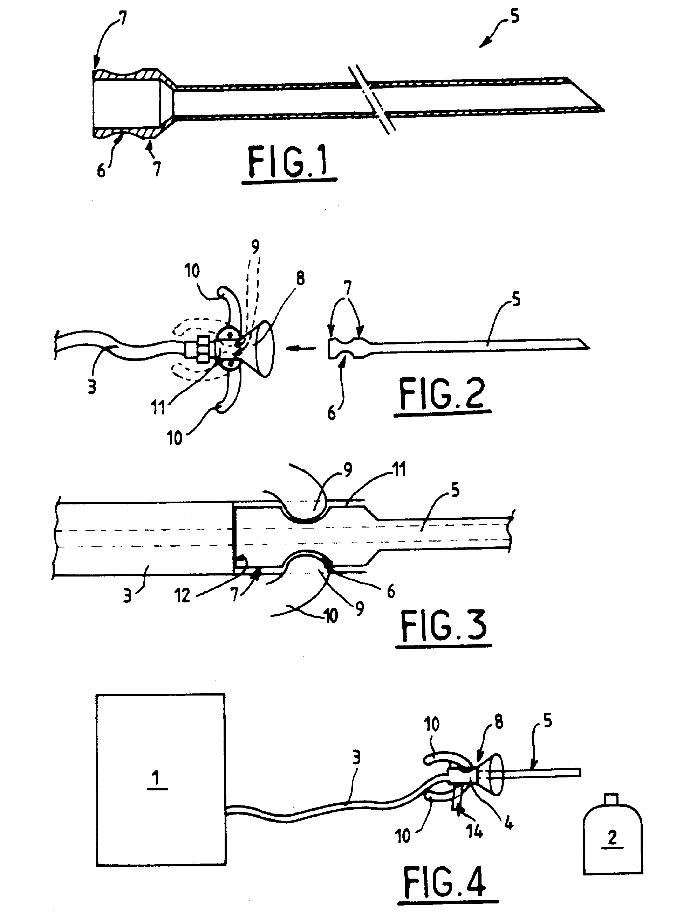

La figure 1 représente un exemple non limitatif de canne 5 de transfert de fluide cryogénique. Contrairement aux dispositifs de l'art antérieur, la canne 5 selon l'invention peut être fixée et démontée de son dispositif de transfert. Les cannes 5 peuvent être ainsi prévues pour un usage unique (par exemple jetées ou recyclée après usage).

L'invention permet ainsi de réduire les risques de contamination entre des cuves de liquide cryogénique remplies au moyen d'une canne de transfert, en particulier lors d'opération de « biberonnage » et d'opérations de soutirage depuis une source de liquide pressurisé ou non.

La canne 5 représentée à la figure 1 comprend un corps tubulaire dont une première extrémité est destinée à être raccordée fluidiquement à un conduit 3 flexible (cf. figure 2) et une seconde extrémité libre est destinée à être introduite dans les cuves lors du transfert de fluide.

La première extrémité de la canne 5 comprend une zone en creux 6 délimitée par des portions 7 de plus grand diamètre. Cette géométrie est prévue pour coopérer sélectivement avec un système d'attache rapide conjugué et amovible d'un dispositif de transfert de liquide tel que décrit ci-après.

La seconde extrémité de la canne 5 peut être par exemple biseautée.

La canne 5 est de préférence constituée de matière plastique moulée ou extrudée.

Par exemple la canne 5 comprend ou est constituée de matériau plastique polymère tel qu'un thermoplastique ou un polyester, notamment l'un au moins parmi : le Polyoxyméthylène (POMP), Polybutylene terephtalate (PBT), le Polyéthylène haute densité (PEHD).

Tout autre type de matériau compatible avec une utilisation pour le transfert de liquide cryogénique concerné peut également être envisagé.

De cette façon, les cannes 5 selon l'invention présentent de très bonnes caractéristique mécaniques (tenue aux chocs) et physiques (tenue à la température) pour ladite application. Les cannes peuvent être emballée individuellement sous plastique à la fabrication et déballée juste avant l'opération de transfert. La canne 5 peut avantageusement être stérilisée avant son usage (unique de préférence), par exemple par rayons gamma lors de sa fabrication.

Comme représenté aux figures 2 et 3, la première extrémité de la canne 5 a une forme déterminée pour coopérer sélectivement avec un système d'attache 9, 10 conjugué et amovible situé sur la seconde extrémité du conduit 3 flexible et/ou sur un organe 4 de préhension raccordé à l'extrémité du conduit 3 flexible.

Le système d'attache est de préférence un système d'attache rapide, par exemple un système d'attache rapide du type à raccord rapide à cames 9 avec ou sans verrouillage (par exemple le système avec verrouillage « Saflok » de la société Aflex).

Par exemple, la seconde extrémité du conduit 3 flexible et/ou de l'organe 4 de préhension monté sur cette extrémité du conduit 3 comprend un logement 11 de forme générale tubulaire destiné à accueillir la première extrémité de la canne 5 tubulaire (cf. figures 2 et 3). L'extrémité du conduit 3 flexible et/ou de l'organe 4 de préhension comprend par exemple deux cames 9 actionnables par des leviers 10 pivotants entre une position escamotée par rapport au logement et une position en saillie dans le logement 11 (cf. figure 3 et en pointillés à la figure 2), pour coopérer sélectivement en butée mécanique avec la première extrémité de la canne 5 tubulaire disposée dans le logement 11. Comme discuté précédemment, les leviers 10 peuvent comporter un système de verrouillage (non représenté par soucis de simplification permettant de sécuriser la position de verrouillage (par exemple système du type « Saflok » avec pêne de blocage sollicité par ressort vers un orifice).

De préférence, lorsque la canne 5 est en position montée dans le logement 11 tubulaire, l'étanchéité entre d'une part la première extrémité de la canne 5 et d'autre part le conduit 3 flexible et l'extérieur est réalisée par contact direct entre la première extrémité l'extrémité de la canne 5 tubulaire et une paroi 12 dudit logement 11 (cf. figure 3). C'est-à-dire qu'un joint d'étanchéité peut être omis pour réaliser l'étanchéité entre la canne 5 et conduit 3 de transfert. Le matériau plastique constitutif de la canne 5 peut en effet permettre de réaliser cette étanchéité (étanchéité entre l'extrémité de la canne 5 et la paroi 12 du logement par simple contact avec pression). La paroi 12 du logement est par exemple en inox.

Comme représenté aux figures 2 et 4, le dispositif peut comprendre classiquement un déflecteur 8 anti-retour de fluide fixé sur la seconde extrémité du conduit 3 flexible et/ou sur l'organe 4 de préhension. Le déflecteur 8 comprend par exemple une paroi tubulaire formée autour de la première extrémité de la canne 5, la paroi tubulaire du déflecteur 8 s'évasant en direction de la seconde extrémité de la canne 5.

Comme représenté à la figure 4, le dispositif de transfert peut être utilisé pour assurer le transfert de liquide entre une source 1 et une ou des cuves 2. A chaque opération (pour chaque cuve), une canne « propre » peut être utilisée. Par ailleurs, une poignée14 de préhension manuelle peut être prévue sur la seconde extrémité du conduit 3 flexible et/ou sur l'organe 4 de préhension pour améliorer l'ergonomie pour l'opérateur.

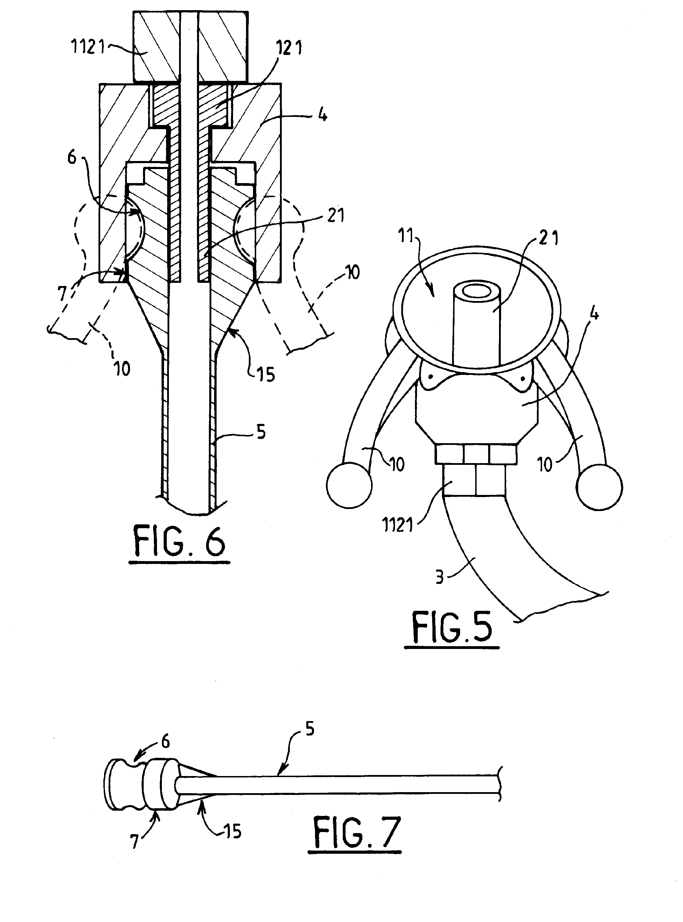

La figure 7 illustre une variante de réalisation préférée de la canne 5 de transfert qui est indépendante des autres caractéristiques ci-après ou ci-dessus. La canne de la figure 7 se distingue de celle de la figure 1 uniquement en ce qu'une ou des nervures 15 de renforcement mécanique sont prévues entre d'une part la première extrémité (creux 6 et zones(s) 7 de plus grand diamètre 7) et, d'autre part, le reste de la partie tubulaire de la canne 5. Ces nervures 15 discrètes ou continues forment un ou des renforts entre les parties de la canne présentant une grande différence de dimensions. Ces renforts limitent les risques de fissures, notamment au niveau des arêtes vives de la canne 5.

Les figures 5 et 6 illustrent une variante de réalisation préférée de l'extrémité du conduit flexible 3 recevant la canne 5. Les éléments identiques à ceux décrits ci-dessus sont désignés par les mêmes références numériques et ne sont pas décrits une seconde fois. En effet, contrairement au mode de réalisation de la figure 3, dans la réalisation des figures 5 et 6, la première extrémité de la canne 5 est emmanchée sur un tube 21 d'amenée du fluide disposé dans le logement 11 recevant la première extrémité de la canne 5. Le tube 21 est par exemple constitué de matériau métallique, notamment d'inox.

Le tube 21 est par exemple solidaire d'une base 121 filetée qui est montée dans un logement du corps de l'organe 4 de préhension. L'organe 4 de préhension est monté à l'extrémité du flexible 3. De préférence, la base 121 du tube 21 est filetée et est vissée sélectivement dans un logement taraudé de l'organe 4 de préhension.

La base 121 du tube 21 est par exemple solidaire d'une pièce 1121 de réglage faisant saillie à l'extérieur du corps de l'organe 4 de préhension. La pièce 1121 de réglage est par exemple monobloc ou assemblée au tube 21 via la base 121. La pièce 1121 de réglage a par exemple un profil à plusieurs pans pour permettre sa rotation avec une clé adaptée (ou manuellement avec un gant) en vue de visser le tube 21 dans l'organe 4 de préhension.

L'agencement des figures 5 et 6 présente de nombreux avantages. En effet, lors du montage de la canne 5 dans le logement 11 de l'organe 4 de préhension, la première extrémité de la canne 5 est guidée au niveau de ses parois extérieures et intérieures. Plus précisément, le tube 21 assure un parfait positionnement de la canne 5 dans le logement 11. De plus, le montage avec emmanchement de la canne 5 sur le tube 21 qui délivre le fluide cryogénique assure une meilleure étanchéité que dans le mode de réalisation de la figure 3. En particulier, lorsque du fluide cryogénique circule, selon le différentiel de rétractation des matériaux constitutifs respectivement de la cane et du tube 21, l'étanchéité peut même être améliorée. En effet, une contraction relative de l'extrémité de la canne 5 sur tube peut augmenter l'étanchéité de l'ensemble.

Par exemple, lorsque la canne 5 est en matière plastique et que le tube est en matériau métallique, par exemple en inox, le retrait du matériau de la canne 5 soumis au froid peut être plus rapide que le retrait du tube.

## Revendications

1. Dispositif destiné à transférer du liquide cryogénique d'une source (1) de liquide vers un cuve (2) de réception, le dispositif comprenant un conduit (3) flexible ayant une première extrémité destinée à être reliée à la source (1) de liquide et une seconde extrémité comprenant un organe (4) de préhension manuelle muni d'une canne (5) tubulaire de transfert, la canne (5) tubulaire comprenant une première extrémité raccordée fluidiquement au conduit (3) flexible et une seconde extrémité libre destinée à être introduite dans la cuve (2) de réception lors du transfert de liquide de la source (1) vers la cuve (2) de réception, **caractérisé en ce que** la première extrémité de la canne (5) est fixée de façon sélectivement démontable sur la seconde extrémité du conduit (3) flexible et/ou sur l'organe (4) de préhension et **en ce que** la canne (5) comprend ou est constitué de matériau plastique.

2. Dispositif selon la revendication 1, **caractérisé en ce que** la première extrémité de la canne (5) est fixée de façon sélectivement démontable sur un tube (21) de la seconde extrémité du conduit (3) flexible et/ou sur l'organe (4) de préhension.

3. Dispositif selon la revendication 2, **caractérisé en ce que** la première extrémité de la canne (5) tubulaire est emmanchée sur le tube (21), ledit tube (21) assurant le transit de fluide cryogénique et ayant un diamètre extérieur égale ou inférieur au diamètre intérieur de la canne (5).

4. Dispositif selon la revendication 2 ou 3, **caractérisé en ce que** les matériaux constitutifs respectivement de la canne (5) et du tube (21) ont des propriétés de rétractation mécanique lorsqu'ils sont soumis à des températures cryogéniques pour provoquer une contraction relative de l'extrémité de la canne (5) sur le tube (21) lorsque du fluide cryogénique circule dans le dispositif.

5. Dispositif selon l'une quelconque des revendications 1 à 4, **caractérisé en ce qu'**au moins la première extrémité de la canne (5) comprend ou est constituée de matériau plastique et **en ce que** le tube (21) est constitué d'un matériau métallique, par exemple de l'inox.

6. Dispositif selon l'une quelconque des revendications 1 à 5, **caractérisé en ce que** la première extrémité de la canne (5) tubulaire comprend au moins un creux (6) et/ou au moins une saillie (7) destiné à coopérer sélectivement avec un système d'attache (9, 10) conjugué situé sur la seconde extrémité du conduit (3) flexible et/ou sur l'organe (4) de préhension.

7. Dispositif selon l'une quelconque des revendications 1 à 6, **caractérisé en ce que** la première extrémité de la canne (5) tubulaire est fixée sélectivement sur la seconde extrémité du conduit (3) flexible et/ou sur l'organe (4) de préhension via un système d'attache rapide du type à raccord rapide à cames (9) mobiles, avec ou sans verrouillage.

8. Dispositif selon l'une quelconque des revendications 1 à 7, **caractérisé en ce que** la seconde extrémité du conduit (3) flexible et/ou l'organe (4) de préhension comprend un logement (11) de forme générale tubulaire destiné à accueillir la première extrémité de la canne (5) tubulaire.

9. Dispositif selon la revendication 8, **caractérisé en ce que** la seconde extrémité du conduit (3) flexible et/ou l'organe (4) de préhension comprend au moins une pièce d'attache (9) mobile et actionnable (10) manuellement entre une position escamotée par rapport au logement (11) et une position en saillie dans le logement (11) pour coopérer sélectivement en butée mécanique avec la première extrémité de la canne (5) tubulaire disposée dans le logement (11).

10. Dispositif selon l'une quelconque des revendications 1 à 9, **caractérisé en ce que** la canne comprend ou est constituée de plastique polymère tel qu'un thermoplastique ou un polyester, notamment l'un au moins parmi : le Polyoxyméthylène (POMP), Polybutylene terephtalate (PBT), le Polyéthylène haute densité (PEHD).

11. Installation de transfert de liquide cryogénique comprenant une source (1) de liquide et un dispositif de transfert sélectif du liquide cryogénique entre la source (1) de liquide et au moins une cuve (2) de réception, l'installation étant **caractérisée en ce que** le dispositif de transfert est conforme à l'une quelconque des revendications 1 à 10.

12. Canne tubulaire destinée à être raccordée à l'extrémité d'un conduit (3) de transfert de liquide cryogénique, la canne (5) comprenant une première extrémité comprenant au moins un creux (6) et/ou au moins une saillie (7) prévue pour sa fixation sur un système d'attache rapide conjugué d'un dispositif de transfert de liquide et une seconde extrémité libre destinée à être introduite dans la cuve (2) de réception lors du transfert de liquide de la source (1) vers la cuve (2) de réception, **caractérisé en ce que** la canne (5) comprend ou est constitué de matériau plastique.

13. Procédé de transfert de liquide cryogénique à partir d'une installation selon la revendication 11 et de cannes (5) selon la revendication 12 pour remplir une pluralité de cuves (2) distinctes, le procédé étant **caractérisé en ce qu'**il utilise une première canne (5) tubulaire pour réaliser le transfert de liquide dans une première cuve (2), le procédé comprenant ensuite des étapes de retrait de la canne (5) utilisée et de remplacement de la canne utilisée par une nouvelle canne (5) vierge à chaque transfert de fluide dans une nouvelle cuve (2).
